# EUROPEAN PATENT SPECIFICATION

(11) **EP 2 538 635 B1**
(45) Date of publication and mention of the grant of the patent: **05.11.2014**
(21) Application number: 11290281.2
(22) Date of filing: 21.06.2011
(51) Int. Cl.: H04L 29/08

(54) **Method of delivering content from a content delivery protocol server to a client, and device for use in such a method**
Verfahren zur Auslieferung von Inhalten aus einem Inhaltsauslieferungs-Protokollserver an einen Client sowie Vorrichtung zur Verwendung mit solch einem Verfahren
Procédé de fourniture de contenu d'un serveur de protocole de fourniture de contenu à un client et dispositif pour l'utilisation d'un tel procédé

(43) Date of publication of application: 26.12.2012
(73) Proprietor: ALCATEL LUCENT, 92100 Boulogne-Billancourt (FR)
(72) Inventor: De Schepper, Koen, B-2650 Edegem (BE); Huysegems, Rafael, 2800 Walem (BE)
(74) Representative: ALU Antw Patent Attorneys

(56) References cited:
- US-A1- 2003 187 631
- US-A1- 2005 229 243
- US-A1- 2005 257 258

## Description

### Technical field

The present invention relates to the field of content delivery. According to embodiments, the invention relates to a method for delivering content from a content delivery protocol server, such as a Shared Content Addressing Protocol (SCAP) server, to a client such as an HTTP client; and to a device for use in such a method.

### Background

US 2003/187631 discloses a host linkage processing system which permits host linkage communications to be safely performed between a host within a protected network and a client outside the network.

For the distribution of content, such as video or audio content, application layer protocols such as HTTP can be used. The disadvantage of such protocols is that they are not particularly suited to deliver streaming content. To address this problem, new content delivery mechanisms have been developed. An example of a new transport protocol allowing end user applications to delegate scalable, reliable content distribution to the transport layer using delivery deadlines, is disclosed in EP 2 173 077 in the name of the Applicant. This transport protocol called Shared Content Addressing Protocol (SCAP) is perfectly suited for the transport of time-critical data such as video streams. To take advantage of such new protocols such as SCAP for the delivery of time-critical HTTP content, the different types of client devices must be extended with an adapted protocol-stack and browser plug-ins must be installed for the different types of browsers to allow protected access to this adapted stack interface. Additionally, filtering and Network Address Translation (NAT) handling rules in residential gateways and firewalls must typically be modified to allow traversal of such new transport protocol messages. Such measures will only be possible on a large scale on the long term, after standardization and a wide acceptance of such a new protocol.

### Summary of the invention

An object of embodiments of the invention is to overcome the problem of the lack of content delivery protocol enabled clients and browsers and/or problems related to firewall traversal when using those content delivery protocols.

The method of the invention for delivering content from a content delivery protocol server adapted to deliver content using a content delivery and caching protocol, to a client adapted to communicate through an Application Layer protocol, such as HTTP, has the features of claim 1. This content delivery and caching protocol is typically specially adapted for the transport of time-critical content such as video content. According to the method the following steps are performed at a gateway between the client and the content delivery protocol server, typically a gateway near the client. The gateway receives an Application Layer protocol get message including identification information concerning content to be delivered by the content delivery protocol server. Upon receiving this get message, the gateway extracts received identification information and requests the content from the content delivery protocol server though the content delivery protocol using the extracted identification information. Note that the received identification information may contain all parameters required by the content delivery and caching protocol, but could also contain identification information allowing the gateway to obtain the required parameters in a local database or in a remote database, e.g. in a Application Layer server. After sending of the request, the gateway receives from the content delivery protocol server the content - said content being delivered using the content delivery protocol - and sends the received content using the Application Layer protocol to the client.

Through the use of such a method where at a gateway application later messages are transformed in content delivery protocol messages and vice versa, firewall traversal problems can be avoided by placing the gateway between the firewall and the content delivery protocol server. Also there is no special content delivery protocol stack needed at the client, and no adapted browser plug-ins are required.

Note that the term content delivery protocol server as used in the context of the present application can also refer to an intermediate content delivery protocol gateway where the content is stored in the cache, and does not necessarily refer to a server at the edge of a content delivery protocol network where all content is stored.

According to a preferred embodiment the content delivery and caching protocol is a Transport Layer protocol such as a shared content addressing protocol (SCAP) disclosed in EP 2 173 077. Preferably the content delivery and caching protocol is adapted for deadline scheduling, i.e. for delivering content taking into account the deadline information associated with the content. Further the content delivery protocol may be configured to allow:
- flexible content addressing, i.e. partial content retrieval using addressing ranges; and/or
- priority scheduling, i.e. allowing to assign different priority levels to content to be retrieved; and/or
- secure communication using security information.

According to a preferred embodiment the identification information includes addressing information as used by the content delivery protocol. In that way the gateway can easily extract the addressing information and use it for requesting the content using the content delivery protocol.

Preferably the gateway also obtains deadline information associated with the content. The requesting and receiving of the content may then use deadline scheduling based on the obtained deadline information. Note that deadline information may be obtained through the received get message but could also be obtained through other means. It could e.g. be obtained using the identification information through a database linked to the gateway. According to another possibility the method comprises obtaining by the gateway of addressing information and/or deadline information through the sending of an Application Layer request containing the identification information to an Application Layer server adapted for performing address mapping and/or deadline assignment.

According to another aspect of the invention there is provided a method for delivering content from a content delivery and caching protocol server to a client adapted to communicate through an Application Layer protocol, the method comprising the following steps performed by the client. The client sends an Application Layer protocol request message to an Application Layer protocol server, said request message containing a request for content available from the content delivery protocol server. The client receiving an Application Layer protocol response message containing identification data related to the requested content. Next the client sends an Application Layer protocol get message including identification information associated with said identification data to a gateway configured to request and receive the requested content from the content delivery protocol server using said information. Upon receiving the requested content at the gateway the client receives from this gateway the requested content using the Application Layer protocol.

According to a preferred embodiment also deadline information of the content is received from the Application Layer server. This deadline information may optionally be modified by the client based on user interaction timing information and this (modified) deadline information is then included in the Application Layer get message sent to the gateway.

According to an embodiment of the invention the Application Layer protocol is any one of the following protocols: HTTP, SIP, SNMP, FTP.

According to a further embodiment of the invention there is provided a device, typically included in a gateway for use in an embodiment of the method of the invention, for use in the delivery of content from a content delivery and caching protocol server to a client adapted to communicate through an Application Layer protocol. The device comprises an Application Layer protocol component adapted for receiving an Application Layer protocol get message including identification information for content available from the content delivery protocol server; a converter adapted for extracting the identification information from the get message and for converting said identification information in a format recognised by the content delivery protocol; a content delivery protocol component adapted for requesting said content from the content delivery protocol server using said converted identification information; and for receiving from said content delivery protocol server said content delivered using the content delivery protocol. The Application Layer protocol component is further adapted for sending the received content using the Application Layer protocol to the client.

According to a preferred embodiment the Application Layer protocol component is further adapted to obtain deadline information for said content. This deadline information could e.g. be included in a get message received by the Application Layer protocol component and could be extracted by the converter. The content delivery protocol component is then preferably adapted for requesting and receiving the content using deadline scheduling based on the obtained deadline information.

According to a further developed embodiment the device may comprise a scheduler adapted for scheduling the sending of the received content to the client taking into account the deadline information.

According to a preferred embodiment the converter is,further adapted to extract Application Layer parameters from the get message and to use those parameters for sending the received content using the Application Layer protocol to the client.

According to another aspect of the invention there is provided a system comprising an embodiment of a device as disclosed above, a client having a firewall, and a content delivery protocol server. The device is located in a gateway between the client and the content delivery protocol server, after the firewall of the client. Further the system may comprise an Application Layer server. The Application Layer server is preferably adapted for providing the client with identification information concerning content available on the content delivery protocol server. The device could e.g. be located at the access node of the client or in the residential gateway of the client.

According to yet another aspect of the client there is provided an Application Layer server adapted for providing a client with identification information concerning content available on a content delivery protocol server. This could e.g. be an HTTP server which is adapted to respond to an HTTP GET message with identification data, and in particular with addressing and deadline information, associated with content available on a content delivery protocol server, e.g. a SCAP server.

### Brief description of the figures

The accompanying drawings are used to illustrate presently preferred non-limiting exemplary embodiments of methods and devices of the present invention. The above and other advantages of features and objects of the invention will become more apparent and the invention will be better understood from the following detailed description when read in conjunction with the accompanying drawings, in which:
Figure 1 is a schematic diagram illustrating a first embodiment of the method of the invention;
Figure 2 is a schematic diagram illustrating a second embodiment of the method of the invention; and
Figure 3 is a schematic diagram illustrating an embodiment of the device of the invention.

### Description of embodiments

According to an embodiment of the invention an HTTP/SCAP gateway/converter is provided in the network. In that way, the HTTP client can address the HTTP/SCAP gateway/converter using HTTP in order to obtain SCAP content from a SCAP origin server, such that the HTTP client must not be replaced by a SCAP client and firewall/NAT traversal problems are avoided. From the gateway up to the SCAP origin server, it is then possible to use the enhanced content delivery capabilities of SCAP. In order for the gateway to know the required SCAP information for being able to send a specific SCAP request including e.g. request deadlines, etc., the HTTP client first obtains identification data regarding the SCAP content from an HTTP server and sends this data or associated information to the HTTP/SCAP gateway. With this identification information the HTTP/SCAP gateway translates HTTP messages from the HTTP client to SCAP messages and vice versa. In other words, according to this embodiment, use is made of a modified origin HTTP server adapted to provide the identification information of content that is available through SCAP. Further, optionally, at the HTTP client there may be provided a client applet or a script or an algorithm to add user interaction timing information to an HTTP request that is sent to the HTTP/SCAP gateway or to modify certain information received from the HTTP server. E.g. in case of a video with trick play, there could be added adapted user interaction timing information depending on whether the video is played normally or whether a fast forward, a rewind, a pause or a skip function is used. Also, if addressing and deadline information concerning the content are received from the HTTP server, this information may be modified by the HTTP client based on the status of the client and/or on certain actions taking place at the client, etc.

Embodiments of the invention can be implemented by making a gateway network element act as an "HTTP to content delivery protocol" gateway/proxy. This enables the deployment of more efficient and scalable content delivery protocols in the network with little or no impact on the existing HTTP client applications, web browsers, residential gateways and/or firewalls. Embodiments of the method will allow the HTTP server which is adapted to give the required information, to steer the HTTP to content delivery protocol gateways via the client, with optionally extra logic in the client via scripts or applets. According to preferred embodiments the HTTP to content delivery gateway is located close to the end users. Such a gateway is adapted to act as an HTTP server for the client and as a content delivery protocol client towards the network. In that way, client applications can use standard supported HTTP requests to fetch content via the content delivery protocol network.

In the examples disclosed below, the content delivery protocol is a Shared Content Addressing Protocol (SCAP), but the skilled person will understand that the method of the invention can also be used for other new content delivery protocols which require especially adapted protocol stack and browser plug-ins, and in particular content delivery protocols using the Transport Layer and/or the Network Layer. An example of another protocol that can be used in the context of the present invention is a Content-Centric Networking (CCNx) protocol or a multicasting protocol such as an Internet Group Management Protocol (IGMP).

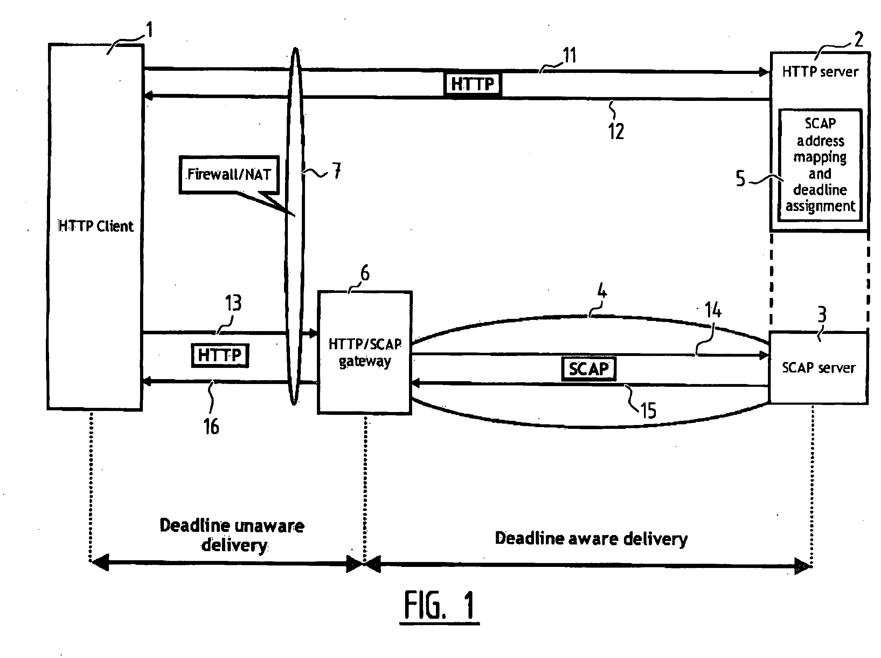

Now a first embodiment of the invention will be set out in detail referring to figure 1. In a first step 11, an HTTP client 1 sends an HTTP GET request 11 for content. This is assumed to be a request referring to content which is available at a SCAP server 3 and which needs to be transported over a SCAP network 4. This request 11 is sent to an HTTP server 2. The HTTP server 2 is associated with a database storing SCAP content identification information, in the present example addressing information and deadline information. The HTTP server 2 comprises a SCAP address mapping and deadline assignment component 5 adapted to provide a SCAP URL containing e.g. the information required by the SCAP protocol to successfully send a SCAP request towards a SCAP server 3. The SCAP URL can be embedded as a reference in a top-level webpage, or can be the target of a redirect message. An example of a SCAP encoded HTTP URL for a video fragment is: http://scapproxy.net/video/x-ms-wmv/172.31.206.221:649398-5024900100-2000 and for a XML text file: http://scapproxy.net/text/xml/172.31.206.221:564747983-11996 2@100-200. The structure is as follows: http://<scap proxy ip or name>/<mime-type>/<content ip address>:<content address>-<content size>@<deadline begin>-<deadline end>, the mime type being in the format of: ------/------.

In step 12 the HTTP server 2 sends a response containing the SCAP URL. In step 13 the HTTP client 1 requests the SCAP URL as a normal HTTP GET request towards a HTTP/SCAP gateway 6. Optionally, extra client dependent parameters could be added to the request, as will be explained in detail below. The HTTP GET request is received by the HTTP/SCAP gateway 6 and converted to a SCAP request by extracting the SCAP required parameters from the SCAP URL. In step 14 a SCAP request including the SCAP required parameters is sent to a SCAP server 3 where the required SCAP content is available. In step 15 the SCAP server 3 delivers the content to the HTTP/SCAP gateway 6. The HTTP/SCAP gateway 6 then delivers the content to the HTTP client 1 using HTTP in step 16. Optionally, information previously extracted from the SCAP URL may be added to the response message together with the content.

Note that the HTTP server could also be adapted to return a different type of identification data of the SCAP content to the client. In a possible embodiment the data in the response message does not contain addressing and deadline information, but allows the HTTP/SCAP gateway 6 to obtain the required addressing and deadline information using the received data. According to another example the data only contains addressing information (e.g. http://scapproxy.net/video/x-ms-wmv/172.31.206.221:649398~502490), and the dead-line information is determined at the gateway 6. Also, in the event that the client has certain SCAP functionalities, the HTTP server could return a native SCAP URL, e.g. scap://172.31.206.221:649398-502490@100-2000. This native SCAP URL could then be transformed by the client into an HTTP encoded SCAP URL which can be used to contact the gateway 6 in a situation where the client cannot retrieve the content using SCAP e.g. because of the presence of a firewall.

In connection with the embodiment of figure 1, a number of possible methods for directing the HTTP message to the SCAP network will be discussed. According to a first embodiment the HTTP/SCAP gateway 6 may be provided as an outbound proxy configured at the client side, optionally via DHCP or another configuration protocol. As a result, the HTTP client 1 will address its HTTP requests towards the HTTP/SCAP gateway 6. According to a second embodiment a client request 13 is intercepted by an HTTP/SCAP gateway 6 located on the path from the client to the HTTP server 2. This location could e.g. be the residential gateway of the client, the access node, etc. Upon interception, the gateway 6 will then convert the original HTTP into a SCAP request. When receiving the requested content, the HTTP/SCAP gateway 6 will send the content to the client 1 using a conventional HTTP reply, in that way spoofing the identity of the original HTTP server. According to a third embodiment the original HTTP server 2 redirects the HTTP GET request 13 of the client to an HTTP/SCAP gateway. In this case, the HTTP server will typically have topology information and is adapted to find the corresponding gateway 6 best suited to handle the client request. According to a fourth embodiment DNS redirection is used, where there is provided a DNS server adapted to redirect client requests by resolving a gateway name or the origin HTTP server name to the IP address of the HTTP/SCAP gateway 6. This redirection by a DNS server can e.g. be based on resource location, network conditions, content type, etc. Such a DNS server could be adapted to perform any or more of the following redirect mechanisms:
- any identification data indicating SCAP only content could be redirected by the local DNS towards the closest HTTP/SCAP proxy 6;
- the generic SCAP proxy name (e.g. http://scapproxy/...) can be configured in the local DNS for redirection to the closest SCAP proxy;
- any identification data with an extra DNS service/application indicator (e.g. "scap:") could be redirected to an appropriate HTTP/SCAP proxy, e.g. a proxy having a contact IP address next to the origin content IP address (please explain).

Now a number of possible embodiments for generating and converting identification information will be discussed. This explanation will be given for the SCAP protocol as disclosed in EP 2 173 077, but the skilled person will understand that similar considerations and features apply for other content delivery and caching protocols. The HTTP/SCAP gateway 6 uses a number of parameters to perform a SCAP request towards the SCAP network:
- a SCAP content IP address referring to the IP address of the SCAP content origin server 3;
- a SCAP content address referring to the first requested byte identified by a unique content-identification-address in the SCAP system;
- a SCAP content size indicating how many bytes must be retrieved. Together with the SCAP content address, the SCAP content size indicates the last byte to be requested.
- a SCAP deadline begin indicating towards the SCAP system the latest acceptable content delivery time for the first byte
- a SCAP deadline end indicating towards the SCAP system the latest acceptable content delivery time for the last byte.

When the content is received from the SCAP network 4, the gateway 6 provides a conventional HTTP response towards the client. This HTTP response contains a number of parameters embedded in the HTTP header. Because SCAP is an application agnostic transport protocol that does not allow application level meta data (other than the generic SCAP parameters, and the content itself) to be passed from the server to the client, the HTTP/SCAP gateway 6 is adapted to include extra HTTP parameters to be echoed in the HTTP response:
- HTTP mime-type;
- HTTP content encoding;
- other specific HTTP headers that may be needed by intermediate HTTP functions or layers.

There are different ways to embed parameters such as the parameters needed for the SCAP request message 14 and the parameters needed for the HTTP response message 16, in the HTTP request:
- as part of the URL name;
- embedded as parameters in the URL request; (GET /scapcontent?ipaddr=172.31.206.221&contentaddr=64998& etc)
- using a POST request with parameters in the content body;
- encoded in the HTTP header (possibly reusing the range and/or other headers for the SCAP content addressees).

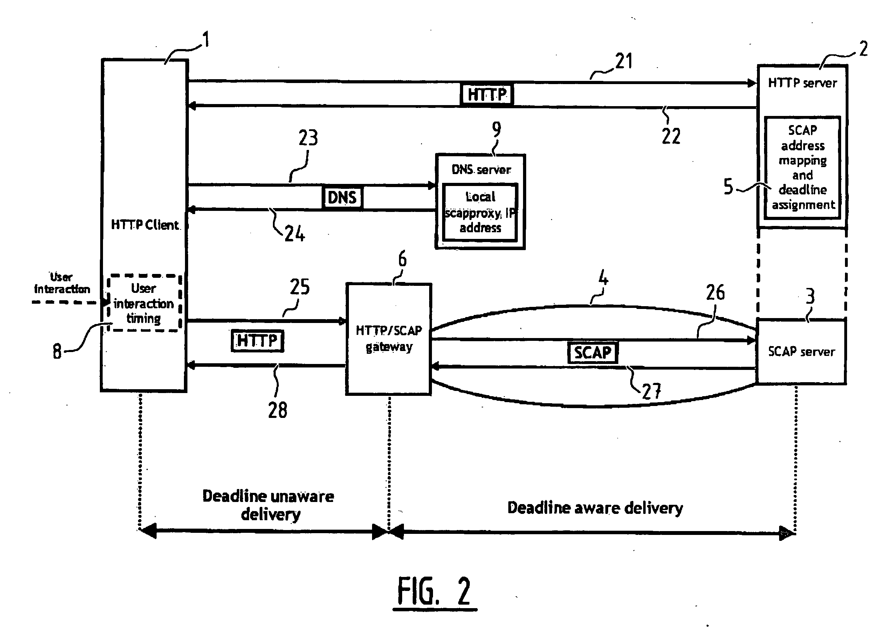

Figure 2 illustrates a second embodiment of the method of the invention. In a first step 21 a HTTP video client 1 sends a request for a video webpage to the HTTP server 2. In step 22 the HTTP server 2 provides the requested webpage to the client. In the illustrated embodiment the URL to the video media sent in step 22 is encoded as a SCAP URL, and contains the correct SCAP information, i.e. the content address range and deadlines as defined above, and HTTP response information (mime-type), encoded in a predetermined way that is understood by the HTTP/SCAP gateway 6. In the illustrated embodiment it is assumed that there are different HTTP/SCAP gateways 6 in the network and that the HTTP server 2 is unaware of the topology of the different HTTP/SCAP gateways. DNS servers 9 are used to map a single name (e.g. scapproxy) to the correct local HTTP/SCAP gateway 6. The URLs to the video media can have a single name for all HTTP/SCAP gateways in the network, see also the fourth embodiment for directing the HTTP message to the SCAP network discussed above in connection with figure 1. In step 23 a RESOLVE scapproxy request is sent to the DNS server 9 which responds in step 24 with the IP address of the HTTP/SCAP gateway 6 to be used by the client 1, e.g. the closest HTTP/SCAP gateway for this client 1. Optionally there may be provided a user interaction timing component 8 at the client 1. Through this component the client can optionally include or modify for example timing parameters based on for example user interaction. According to a possible embodiment such a user interaction timing component 8 is provided by a server in the form of a script or applet adapted to control the manipulation of the timing parameters. In step 25 the client requests the video media URL to the closest HTTP/SCAP gateway 6, using a GET SCAP URL message. The gateway 6 decodes the video media URL to the unique content identification address, server and deadlines for the SCAP protocol. If the gateway 6 does not have the content in its local cache, in step 26 it will forward the request to the SCAP server using the SCAP protocol. Based on the deadliness, the server evaluates all incoming requests 26 and will start scheduling the replies based on the provided deadline(s). Requests with an early deadline will be scheduled first. In step 28 the gateway 6 starts to send the HTTP reply header with the mime-type and content length fields decoded from the request URL, and when SCAP content replies are received in step 27, the content in SCAP replies will be passed on to the HTTP connection to the client. Because the gateway 6 is SCAP-aware and knows the deadlines for the content, it can optionally be adapted to also schedule the reply messages to the HTTP client in step 27. Such a scheduling by the gateway 6 assures a high rate for initial buffer filling such that the deadline unaware delivery when using HTTP is made to be at least partly deadline aware. The client 1 receives the content via a standard HTTP connection (step 27) and can render the video to the screen as a normal progressive download client. Because of the high priority of urgent content, the client can receive the first urgent bytes of data with a higher rate, reducing the required buffering time of the client.

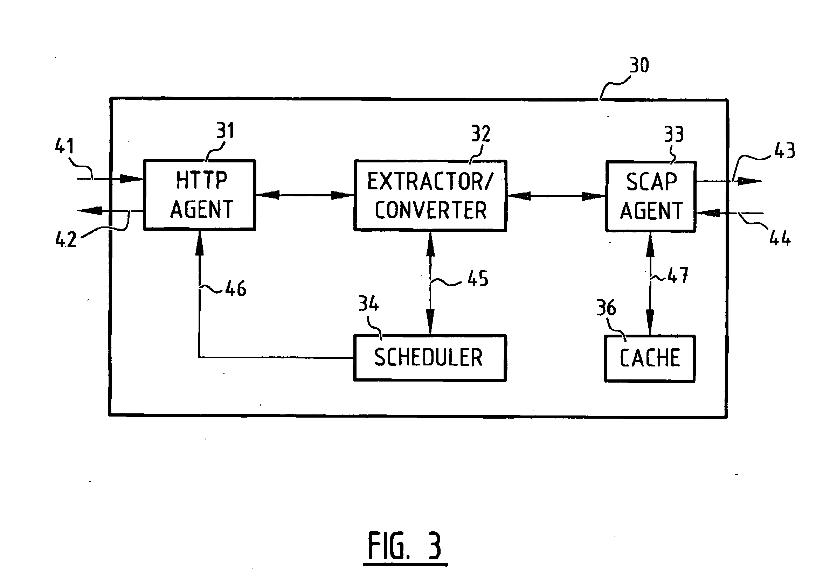

Figure 3 illustrates an embodiment of a device of the invention, typically included in a HTTP/SCAP gateway 6 disclosed in figures 1 and 2. The device 30 comprises an HTTP agent 31 adapted for receiving an HTTP GET message, see arrow 41, including identification information for content available from a SCAP server, an extractor/converter 32 adapted for extracting the identification information from the GET message and for converting the identification information in a format recognised by SCAP, and a SCAP agent 33 adapted for requesting the content from the SCAP server using the converted identification information and for receiving said content from the SCAP server, see arrows 43 and 44. The extractor/converter 32 is further adapted to extract the content from the received SCAP messages and to pass it in a format suitable for sending through HTTP to the HTTP agent 31. In other words the extractor/converter could have a protocol conversion function and/or a content conversion function. The HTTP agent 31 is further adapted for sending the converted content using HTTP to the client, see arrow 42. The extractor/converter 32 is further adapted to extract deadline information from the received HTTP GET message, and the SCAP component is adapted for requesting and receiving of the content using deadline scheduling based on the obtained deadline information. Optionally the device 30 may further comprise a scheduler 34 adapted for scheduling the sending of the received content to the client using HTTP taking into account the deadline information extracted by the extractor/converter 32, see arrows 45 and 46. It is further noted that the device 30 may store the received content in a cache memory 36. Before sending a request for content to the SCAP server, the SCAP agent will check whether the content is available in the cache 36 and if available, the SCAP agent retrieves the content from the cache 36. Only if the content is not available or only partially available; the SCAP agent will send one or more requests for the content or parts of the content. The converter 32 may be further adapted to extract HTTP parameters such as the mime-type, from the HTTP GET message and to use those parameters for sending the received content using HTTP to the client.

Embodiments of the invention will lower dramatically the threshold for deploying the new delivery technology without major impact and investments in existing deployments. An existing HTTP delivery system can be enhanced using the SCAP content distribution techniques. Once the HTTP/SCAP gateways are in place, gradual deployment of transparent SCAP network functions can be done, where most appropriate. For HTTP video applications embodiments of the invention reduce the global amount of picture freezes for the users, improving the QoE. For other application using HTTP embodiments of the invention have the advantage that time-critical data can be delivered with the correct priority. Embodiments of the invention enable to rapidly deploy the SCAP technology with minimal impact on the existing infrastructure.

While the principles of the invention have been set out above in connection with specific embodiments, it is to be clearly understood that this description is merely made by way of example and not as limitation of the scope of protection which is determined by the appended claims.

## Claims

1. Method for delivering content from a content delivery and caching protocol server adapted to deliver content using a content delivery and caching protocol, to a client adapted to communicate through an Application Layer protocol, said content delivery and caching protocol being different from the Application Layer protocol, the method comprising the following steps performed by the client:
- sending (11) an Application Layer protocol request message to an Application Layer server adapted to communicate through the Application Layer protocol, said request message containing a request for content available from the content delivery and caching protocol server;
- receiving (12) an Application Layer protocol response message containing identification data related to the requested content;
- sending (13) an Application Layer protocol get message including information associated with said identification data to a gateway configured to request and receive, using the content delivery and caching protocol, the requested content from the content delivery and caching protocol server using said information; and
- receiving (16) from said gateway the requested content using the Application Layer protocol;
said content delivery and caching protocol being a Transport Layer protocol adapted for the transport
of time critical content such as video.

2. Method of claim 1, wherein said content delivery and caching protocol is adapted for deadline scheduling using deadline information, wherein the deadline information is included in the Application Layer protocol get message sent to the gateway, said deadline information optionally being determined based on user interaction timing information and/or on deadline information received from the Application Layer server.

3. Method for delivering content from a content delivery and caching protocol server adapted to deliver content using a content delivery and caching protocol, to a client adapted to communicate through an Application Layer protocol, said content delivery and caching protocol being different from the Application Layer protocol, the method comprising the following steps performed at a gateway, typically a gateway near the client:
- receiving (13) an Application Layer protocol get message including identification information for content being available from the content delivery and caching protocol server;
- requesting (14) said content from the content delivery and caching protocol server using said identification information;
- receiving (15) from said content delivery and caching protocol server said content delivered using the content delivery and caching protocol; and
- sending (16) the received content using the Application Layer protocol to the client;
said content delivery and caching protocol being a Transport Layer protocol adapted for the transport of time critical content such as video.

4. Method of claim 3, wherein said content delivery and caching protocol is adapted for deadline scheduling using deadline information, wherein said Application Layer protocol get message includes the deadline information, and wherein said deadline information is used for the requesting and receiving of the content using the content delivery protocol.

5. Method of any of the previous claims, wherein said content delivery and caching protocol is adapted for partial retrieval of the content.

6. Method of any of the previous claims, wherein said identification information includes addressing information as used by the content delivery protocol.

7. Method of any of the previous claims, wherein said content delivery and caching protocol is a shared content addressing protocol (SCAP); and/or wherein said Application Layer protocol is any one of the following protocols: HTTP, SIP, SNMP, FTP.

8. Device, typically included in a gateway, for use in the delivery of content from a content delivery and caching protocol server adapted to deliver content using a content delivery and caching protocol, to a client adapted to communicate through an Application Layer protocol, said content delivery and caching protocol being different from the Application Layer protocol, the device comprising:
- an Application Layer protocol component adapted for receiving an Application Layer protocol get message including identification information for content being available from the content delivery and caching protocol server;
- a converter adapted for extracting the identification information from the get message and for converting said identification information in a format recognised by the content delivery protocol;
- a content delivery protocol component adapted for requesting said content from the content delivery and caching protocol server using said converted identification information; and for receiving from said content delivery and caching protocol server said content delivered using the content delivery and caching protocol;
said Application Layer protocol component being further adapted for sending the received content using the Application Layer protocol to the client;
said content delivery and caching protocol being a Transport Layer protocol adapted for the transport of time critical content such as video.

9. Device of claim 8, wherein the Application Layer protocol component is adapted to obtain deadline information for said content, and wherein the content delivery protocol component is adapted for requesting and receiving of said content using deadline scheduling based on the obtained deadline information.

10. Device of claim 8 or 9, further comprising a scheduler adapted for scheduling the sending of the received content to the client taking into account the deadline information.

11. Device of any of the claims 8-10, wherein said content delivery and caching protocol is a shared content addressing protocol (SCAP); and/or wherein said Application Layer protocol is any one of the following protocols: HTTP, SIP, SNMP, FTP.

12. Device of any of the claims 8-11, wherein the converter is further adapted to extract Application Layer parameters from the get message and to use those parameters for sending the received content using the Application Layer protocol to the client.

13. System comprising a device as claimed in any of the claims 8-12, further comprising a client having a firewall, and a content delivery and caching protocol server, wherein said device is located between the firewall and the content delivery and caching protocol server.

14. System of claim 14, further comprising an Application Layer server, said Application Layer server being adapted for providing the client with identification information concerning content available on the content delivery and caching protocol server.

## Patentansprüche

1. Verfahren zur Auslieferung von Inhalt aus einem Inhaltsauslieferungs- und Caching-Protokoll-Server, welcher für die Auslieferung von Inhalt unter Verwendung eines Inhaltsauslieferungs- und Caching-Protokolls ausgelegt ist, an einen Client, welcher für die Kommunikation über ein Anwendungsschicht-Protokoll ausgelegt ist, wobei sich das besagte Inhaltsauslieferungs- und Caching-Protokoll von dem Anwendungsschicht-Protokoll unterscheidet, wobei das Verfahren die folgenden vom Client durchgeführten Schritte umfasst:
- Senden (11) einer Anwendungsschicht-Protokoll-Anforderungsnachricht an einen für die Kommunikation über das Anwendungsschicht-Protokoll ausgelegten Anwendungsschicht-Server, wobei die besagte Anforderungsnachricht eine Anforderung für aus dem Inhaltsauslieferungs- und Caching-Protokoll-Server verfügbaren Inhalt enthält;
- Empfangen (12) einer Anwendungsschicht-Protokoll-Antwortnachricht, welche auf den angeforderten Inhalt bezogene Identifikationsdaten enthält,
- Senden (13) einer Anwendungsschicht-Protokoll-GET-Nachricht, welche mit den besagten Identifikationsdaten assoziierte Informationen enthält, an ein für das Anfordern und den Empfang, unter Verwendung des Inhaltsauslieferungs- und Caching-Protokolls, des angeforderten Inhalts von dem Inhaltsauslieferungs- und Caching-Protokoll-Server unter Verwendung der besagten Informationen konfiguriertes Gateway; und
- Empfangen (16) des angeforderten Inhalts von dem besagten Gateway unter Verwendung des Anwendungsschicht-Protokolls;
wobei das besagte Inhaltsauslieferungs- und Caching-Protokoll ein für den Transport von zeitkritischen Inhalten wie beispielsweise Videos geeignetes Transportschicht-Protokoll ist.

2. Verfahren nach Anspruch 1, wobei das besagte Inhaltsauslieferungs- und Caching-Protokoll für das Deadline-Scheduling unter Verwendung von Deadline-Informationen geeignet ist, wobei die Deadline-Informationen in der an das Gateway gesendeten Anwendungsschicht-Protokoll-GET-Nachricht enthalten sind, wobei die besagten Deadline-Informationen optional auf der Basis von Benutzerinteraktions-Timing-Informationen und/oder von von dem Anwendungsschicht-Server empfangenen Deadline-Informationen ermittelt werden.

3. Verfahren zur Auslieferung von Inhalt aus einem Inhaltsauslieferungs- und Caching-Protokoll-Server, welcher für die Auslieferung von Inhalt unter Verwendung eines Inhaltsauslieferungs- und Caching-Protokoll ausgelegt ist, an einen Client, welcher für die Kommunikation über ein Anwendungsschicht-Protokoll ausgelegt ist, wobei sich das besagte Inhaltsauslieferungs- und Caching-Protokoll von dem Anwendungsschicht-Protokoll unterscheidet, wobei das Verfahren die folgenden an einem Gateway, in der Regel einem Gateway in Nähe des Clients, durchgeführten Schritte umfasst:
- Empfangen (13) einer Anwendungsschicht-Protokoll-GET-Nachricht, welche Identifikationsinformationen für verfügbare Inhalte enthält, von dem Inhaltsauslieferungs-und Caching-Protokoll-Server;
- Anfordern (14) des besagten Inhalts von dem Inhaltsauslieferungs- und Caching-Protokoll-Server unter Verwendung der besagten Identifikationsinformationen;
- Empfangen (15) des besagten unter Verwendung des Inhaltsauslieferungs- und Caching-Protokolls gelieferten Inhalts von dem besagten Inhaltsauslieferungs- und Caching-Protokoll-Server; und
- Senden (16) des empfangenen Inhalts an den Client unter Verwendung des Anwendungsschicht-Protokolls,
wobei das besagte Inhaltsauslieferungs- und Caching-Protokoll ein für den Transport von zeitkritischen Inhalten wie beispielsweise Videos geeignetes Transportschicht-Protokoll ist.

4. Verfahren nach Anspruch 3, wobei das besagte Inhaltsauslieferungs- und Caching-Protokoll für das Deadline-Scheduling unter Verwendung von Deadline-Informationen geeignet ist, wobei die Anwendungsschicht-Protokoll-GET-Nachricht die Deadline-Informationen enthält, und wobei die besagten Deadline-Informationen für die Anforderung und für den Empfang des Inhalts unter Verwendung des Inhaltsauslieferungsprotokolls verwendet werden.

5. Verfahren nach einem beliebigen der vorstehenden Ansprüche, wobei das besagte Inhaltsauslieferungs- und Caching-Protokoll für das teilweise Abrufen des Inhalts geeignet ist.

6. Verfahren nach einem beliebigen der vorstehenden Ansprüche, wobei die besagten Identifikationsinformationen von dem Inhaltsauslieferungsprotokoll verwendete Adressierungsinformationen enthalten.

7. Verfahren nach einem beliebigen der vorstehenden Ansprüche, wobei das besagte Inhaltsauslieferungs- und Caching-Protokoll ein gemeinsames Inhaltsadressierungs-Protokoll (SCAP) ist; und/oder wobei das besagte Anwendungsschicht-Protokoll ein beliebiges der folgenden Protokolle ist: HTTP, SIP, SNMP, FTP.

8. Vorrichtung, in der Regel in einem Gateway enthalten, zur Verwendung für die Auslieferung von Inhalt aus einem Inhaltsauslieferungs- und Caching-Protokoll-Server, welcher für die Auslieferung von Inhalt unter Verwendung eines Inhaltsauslieferungs- und Caching-Protokolls ausgelegt ist, an einen Client, welcher für die Kommunikation über ein Anwendungsschicht-Protokoll ausgelegt ist, wobei sich das besagte Inhaltsauslieferungs-und Caching-Protokoll von dem Anwendungsschicht-Protokoll unterscheidet, wobei die Vorrichtung umfasst:
- Eine Anwendungsschicht-Protokoll-Komponente, ausgelegt für den Empfang einer Anwendungsschicht-Protokoll-GET-Nachricht, welche Identifikationsinformationen für verfügbaren Inhalt enthält, von dem Inhaltsauslieferungs- und Caching-Protokoll-Server;
- einen Konverter, ausgelegt für das Extrahieren der Identifikationsinformationen aus der GET-Nachricht und für das Umwandeln der besagten Identifikationsinformationen in ein von dem Inhaltsauslieferungsprotokoll erkanntes Format;
- eine Inhaltsauslieferungsprotokoll-Komponente, ausgelegt für das Anfordern des besagten Inhalts von dem Inhaltsauslieferungs- und Caching-Protokoll-Server unter Verwendung der besagten umgewandelten Identifikationsinformationen und für den Empfang des besagten unter Verwendung des Inhaltsauslieferungs- und Caching-Protokolls gelieferten Inhalts von dem besagten Inhaltsauslieferungs- und Caching-Protokoll-Server;
wobei die besagte Anwendungsschicht-Protokoll-Komponente weiterhin für das Senden des empfangenen Inhalts unter Verwendung des Anwendungsschicht-Protokolls an den Client ausgelegt ist;
wobei das besagte Inhaltsauslieferungs- und Caching-Protokoll ein für den Transport von zeitkritischen Inhalten wie beispielsweise Videos geeignetes Transportschicht-Protokoll ist.

9. Vorrichtung nach Anspruch 8, wobei die Anwendungsschicht-Protokoll-Komponente für das Einholen von Deadline-Informationen für den besagten Inhalt ausgelegt ist, und wobei die Inhaltsauslieferungsprotokoll-Komponente für das Anfordern und für den Empfang des besagten Inhalts unter Verwendung von Deadline-Scheduling auf der Basis der eingeholten Deadline-Informationen ausgelegt ist.

10. Vorrichtung nach Anspruch 8 oder 9, weiterhin umfassend einen Scheduler, welcher für das Senden des empfangenen Inhalts an den Client unter Berücksichtigung der Deadline-Informationen ausgelegt ist.

11. Vorrichtung nach einem beliebigen der Ansprüche 8-10, wobei das besagte Inhaltsauslieferungs- und Caching-Protokoll ein gemeinsames Inhaltsadressierungs-Protokoll (SCAP) ist; und/oder wobei das besagte Anwendungsschicht-Protokoll ein beliebiges der folgenden Protokolle ist: HTTP, SIP, SNMP, FTP.

12. Vorrichtung nach einem beliebigen der Ansprüche 8-11, wobei der Konverter weiterhin für das Extrahieren von Anwendungsschicht-Parametern aus der GET-Nachricht und für das Verwenden dieser Parameter zum Senden des empfangenen Inhalts unter Verwendung des Anwendungsschicht-Protokolls an den Client ausgelegt ist.

13. System, umfassend eine Vorrichtung gemäß einem beliebigen der Ansprüche 8 bis 12, welches weiterhin einen Client mit einer Firewall und einen Inhaltsauslieferungs- und Caching-Protokoll-Server umfasst, wobei die besagte Vorrichtung zwischen der Firewall und dem Inhaltsauslieferungs- und Caching-Protokoll-Server angeordnet ist.

14. System nach Anspruch 14, weiterhin umfassend einen Anwendungsschicht-Server, wobei der besagte Anwendungsschicht-Server für das Bereitstellen von Identifikationsinformationen in Bezug auf auf dem Inhaltsauslieferungs- und Caching-Protokoll-Server verfügbaren Inhalt an den Client ausgelegt ist.

## Revendications

1. Procédé de distribution de contenu à partir d'un serveur de protocole de distribution de contenu et de mise en antémémoire adapté pour distribuer un contenu au moyen d'un protocole de distribution de contenu et de mise en antémémoire, à un client adapté pour communiquer par l'intermédiaire d'un protocole de couche d'application, ledit protocole de distribution de contenu et de mise en antémémoire étant différent du protocole de couche d'application, le procédé comprenant les étapes suivantes exécutées par le client :
- envoyer (11) un message de demande de protocole de couche d'application à un serveur de couche d'application adapté pour communiquer par l'intermédiaire du protocole de couche d'application, ledit message de demande contenant une demande de contenu disponible à partir du serveur de protocole de distribution de contenu et de mise en antémémoire ;
- recevoir (12) un message de réponse de protocole de couche d'application contenant des données d'identification relatives au contenu demandé ;
- envoyer (13) un message GET de protocole de couche d'application contenant des informations associées auxdites données d'identification à une passerelle configurée pour demander et recevoir, au moyen du protocole de distribution de contenu et de mise en antémémoire, le contenu demandé à partir du serveur de protocole de distribution de contenu et de mise en antémémoire au moyen desdites informations ; et
- recevoir (16), à partir de ladite passerelle, le contenu demandé au moyen du protocole de couche d'application ;
ledit protocole de distribution de contenu et de mise en antémémoire étant un protocole de couche transport adapté pour le transport de contenu prioritaire comme une vidéo.

2. Procédé selon la revendication 1, dans lequel ledit protocole de distribution de contenu et de mise en antémémoire est adapté pour la planification de date limite au moyen d'informations de date limite, dans lequel les informations de date limite sont incluses dans le message GET de protocole de couche d'application envoyé à la passerelle, lesdites informations de date limite étant facultativement déterminées en fonction d'informations de synchronisation d'interaction d'utilisateur et/ou d'informations de date limite provenant du serveur de couche d'application.

3. Procédé de distribution de contenu à partir d'un serveur de protocole de distribution de contenu et de mise en antémémoire adapté pour distribuer un contenu au moyen d'un protocole de distribution de contenu et de mise en antémémoire, à un client adapté pour communiquer par l'intermédiaire d'un protocole de couche d'application, ledit protocole de distribution de contenu et de mise en antémémoire étant différent du protocole de couche d'application, le procédé comprenant les étapes suivantes exécutées au niveau d'une passerelle, généralement une passerelle proche du client :
- recevoir (13) un message GET de protocole de couche d'application contenant des informations d'identification pour un contenu disponible à partir du serveur de protocole de distribution de contenu et de mise en antémémoire ;
- demander (14) ledit contenu à partir du serveur de protocole de distribution de contenu et de mise en antémémoire au moyen desdites informations d'identification ;
- recevoir (15) à partir dudit serveur de protocole de distribution de contenu et de mise en antémémoire ledit contenu distribué au moyen du protocole de distribution de contenu et de mise en antémémoire ; et
- envoyer (16) le contenu reçu au moyen du protocole de couche d'application au client ;
ledit protocole de distribution de contenu et de mise en antémémoire étant un protocole de couche transport adapté pour le transport de contenu prioritaire comme une vidéo.

4. Procédé selon la revendication 3, dans lequel ledit protocole de distribution de contenu et de mise en antémémoire est adapté pour la planification de date limite au moyen d'informations de date limite, dans lequel ledit message GET de protocole de couche d'application contient les informations de date limite, et dans lequel lesdites informations de date limite sont utilisées pour la demande et la réception du contenu au moyen du protocole de distribution de contenu.

5. Procédé selon l'une quelconque des revendications précédentes, dans lequel ledit protocole de distribution de contenu et de mise en antémémoire est adapté pour une récupération partielle du contenu.

6. Procédé selon l'une quelconque des revendications précédentes, dans lequel lesdites informations d'identification contiennent des informations d'adressage telles qu'utilisées par le protocole de distribution de contenu.

7. Procédé selon l'une quelconque des revendications précédentes, dans lequel ledit protocole de distribution de contenu et de mise en antémémoire est un protocole d'adressage de contenu partagé (SCAP) ; et/ou dans lequel ledit protocole de couche d'application est l'un quelconque des protocoles suivants : HTTP, SIP, SNMP, FTP.

8. Dispositif, généralement inclus dans une passerelle, destiné à être utilisé dans la distribution de contenu à partir d'un serveur de protocole de distribution de contenu et de mise en antémémoire adapté pour distribuer un contenu au moyen d'un protocole de distribution de contenu et de mise en antémémoire, à un client adapté pour communiquer par l'intermédiaire d'un protocole de couche d'application, ledit protocole de distribution de contenu et de mise en antémémoire étant différent du protocole de couche d'application, le dispositif comprenant :
- un composant de protocole de couche d'application adapté pour recevoir un message GET de protocole de couche d'application contenant des informations d'identification pour un contenu disponible à partir du serveur de protocole de distribution de contenu et de mise en antémémoire ;
- un convertisseur adapté pour extraire les informations d'identification du message GET et pour convertir lesdites informations d'identification dans un format reconnu par le protocole de distribution de contenu ;
- un composant de protocole de distribution de contenu adapté pour demander ledit contenu à partir du serveur de protocole de distribution de contenu et de mise en antémémoire au moyen desdites informations d'identification converties ; et pour recevoir dudit serveur de protocole de distribution de contenu et de mise en antémémoire ledit contenu distribué au moyen du protocole de distribution de contenu et de mise en antémémoire ;
ledit composant de protocole de couche d'application étant en outre adapté pour envoyer le contenu reçu au moyen du protocole de couche d'application au client ;
ledit protocole de distribution de contenu et de mise en antémémoire étant un protocole de couche transport adapté pour le transport de contenu prioritaire comme une vidéo.

9. Dispositif selon la revendication 8, dans lequel le composant de protocole de couche d'application est adapté pour obtenir des informations de date limite pour ledit contenu, et dans lequel le composant de protocole de distribution de contenu est adapté pour la demande et la réception dudit contenu au moyen de la planification de date limite en fonction des informations de date limite obtenues.

10. Dispositif selon la revendication 8 ou 9, comprenant en outre un planificateur adapté pour planifier l'envoi du contenu reçu au client en tenant compte des informations de date limite.

11. Dispositif selon l'une quelconque des revendications 8 à 10, dans lequel ledit protocole de distribution de contenu et de mise en antémémoire est un protocole d'adressage de contenu partagé (SCAP) ; et/ou dans lequel ledit protocole de couche d'application est l'un quelconque des protocoles suivants : HTTP, SIP, SNMP, FTP.

12. Dispositif selon l'une quelconque des revendications 8 à 11, dans lequel le convertisseur est en outre adapté pour extraire des paramètres de couche d'application du message GET et pour utiliser ces paramètres pour envoyer le contenu reçu au moyen du protocole de couche d'application au client.

13. Système comprenant un dispositif selon l'une quelconque des revendications 8 à 12, comprenant en outre un client ayant un pare-feu, et un serveur de protocole de distribution de contenu et de mise en antémémoire, dans lequel ledit dispositif est situé entre le pare-feu et le serveur de protocole de distribution de contenu et de mise en antémémoire.

14. Système selon la revendication 14, comprenant en outre un serveur de couche d'application, ledit serveur de couche d'application étant adapté pour fournir au client des informations d'identification concernant le contenu disponible sur le serveur de protocole de distribution de contenu et de mise en antémémoire.
